# EUROPEAN PATENT APPLICATION

(11) **EP 1 840 246 A1**
(43) Date of publication of application: **03.10.2007**
(21) Application number: 06700919.1
(22) Date of filing: 12.01.2006
(51) Int. Cl.: C25D 5/56, C08J 7/06, C23C 18/20

(54) **METHOD FOR MANUFACTURING PLATED RESIN MOLTED ARTICLE**

(30) Priority: 17.01.2005 JP 2005008607
(71) Applicant: Daicel Polymer Ltd., Tokyo 1088230 (JP)
(72) Inventor: TAI, Toshihiro, Himeji-shi, Hyogo (JP)
(74) Representative: Grünecker, Kinkeldey, Stockmair & Schwanhäusser Anwaltssozietät
(86) International application number: PCT/JP2006/300673
(87) International publication number: WO 2006/075782

(57) **Abstract**

The present invention provides a method for manufacturing plated resin molded article having strong adhesion of plating and giving beautiful appearance. Specifically, it provides a method for manufacturing plated resin molded article having the steps of: contact-treating a thermoplastic resin molded article using an acid or base free from heavy metal; treating the contact-treated thermoplastic resin molded article by a catalyst imparting liquid; forming an electrically conductive layer on the surface of the thermoplastic resin molded article using a direct plating method; and applying electroplating to the electrically conductive layer; without applying the step of etching by an acid which contains heavy metal.

## Description

### Technical Field

The present invention relates to a method for manufacturing plated resin molded article which has strong adhesion of plating.

### Background Art

Resin molded articles such as an ABS resin and a poly amide resin have been used as automobile parts for the purpose of reducing the weight of an automobile, and plating such as copper or nickel is carried out on the resin molded articles in order to give a upscale image and a sense of beauty.

When the plating is carried out on resin molded articles such as an ABS resin, an etching step of roughing the surface of the resin molded articles is conventionally essential to enhance the adhering strength after the removal step of fat. For example, when an ABS resin molded article and a polypropylene molded article are plated, a bath of chromic acid (a mix solution of chromium (III) oxide and sulfuric acid) is used after the removal step of fat, and an etching treatment is required to be carried out at 65 to 70°C for 10 to 15 minutes. Accordingly, poisonous hexa-valent chromic acid ion is contained in waste water. Therefore, a treatment of neutrally precipitating after reducing the hexa-valent chromic acid ion to a tri-valent ion is essential, which creates problems in wastewater treatment.

Considering safety during a work at a spot and an influence to environment due to waste water thus, it is desirable not to carry out an etching treatment using the chromium bath, but in that case, there is a problem that the adhering strength of a plating layer to a molded article which is obtained by an ABS resin and the like cannot be enhanced.

Inventions disclosed in JP-A 2003-82138 and JP-A 2003-166067 are superior in obtaining plated resin molded articles having high plating strength without using the chromic acid etching. They have, however, an issue of consuming large man-hours in the manufacturing process (plating step).

JP-A 5-239660 and WO 98/45505 (Patent No. 3208410) describe the use of direct plating method during the course of plating on the surface of resin molded article. According to the Experimental Example 1 of JP-A 5-239660, however, a pretreatment of surface roughening with pumice is applied, thus it is difficult to manufacture a resin molded article having beautiful appearance. Since WO 98/45505 (Patent No. 3208410) adopts chromic acid etching, it cannot solve the problems of conventional technologies.

### Disclosure of the Invention

An object of the present invention is to provide a method for manufacturing plated resin molded article which can eliminate the etching treatment by chromic acid and the like, which has strong adhesion between the resin molded article and the plating layer, and which provides beautiful appearance.

The first aspect of the present invention is to provide a method for manufacturing plated resin molded article comprising the steps of: contact-treating a thermoplastic resin molded article using an acid or base free from heavy metal; treating the contact-treated thermoplastic resin molded article by a catalyst imparting liquid; forming an electrically conductive layer on the surface of the thermoplastic resin molded article using a direct plating method; and applying electroplating to the electrically conductive layer; without applying the step of etching by an acid which contains heavy metal.

### Detail Description of the Invention

The second aspect of the present invention is to provide the method for manufacturing plated resin molded article according to claim 1, wherein the direct plating method comprises the step of forming an electrically conductive layer on the surface of a thermoplastic resin molded article using a selector liquid which contains a metallic compound, a reducing compound and a metallic hydroxide.

The third aspect of the present invention is to provide the method for manufacturing plated resin molded article according to claim 1 or 2, wherein the thermoplastic resin molded article contains a polyamide.

The fourth aspect of the present invention is to provide the method for manufacturing plated resin molded article according to claim 1 or 2, wherein the thermoplastic resin molded article further contains a substance which has a solubility (23°C) in water of 300 g/100 g or less.

According to the manufacturing method of the present invention, use of the direct plating method allows decreasing the man-hours compared with the inventions disclosed in JP-A 2003-82138 and 2003-166067, and eliminates the toxic reducing agent such as formalin.

The description for individual steps is given below. Regarding the steps described below, a single step may be divided into two or more of sub-steps, and two or more of steps may be integrated into a single step. Furthermore, at needed, a known step in the plating method may be added as described below.

First, the degreasing treatment is applied to a thermoplastic resin molded article which is formed into a shape suitable for the use using a known method such as injection molding.

The degreasing treatment is conducted using an aqueous solution of surfactant containing an alkali such as sodium hydroxide or sodium carbonate, or an acid such as sulfuric acid or carboxylic acid. After the degreasing treatment, the present invention allows to move to succeeding step without need of the etching step using chromic acid and the like, as the surface-roughening treatment in order to increase the adhesion of plating layer, and without need of physical surface-roughening treatment (for example, a treatment of rubbing the surface with pumice, as disclosed in JP-A 5-239660) .

In the next step, the thermoplastic resin molded article is subjected to contact-treatment by an acid or base free from heavy metal (metal such as chromium and manganese). The degreasing treatment as the preceding step may be eliminated, and the contact-treatment may be adopted as the first treatment step.

The acid free from heavy metal may be hydrochloric acid, phosphoric acid, sulfuric acid, or an organic acid such as acetic acid, citric acid or formic acid. The base free from heavy metal may be a hydroxide of alkali metal or alkali earth metal, such as sodium hydroxide, potassium hydroxide, calcium hydroxide or magnesium hydroxide.

A concentration of the acid or base free from heavy metal differs with the kind. For the case of hydrogen chloride, however, a preferred normality is in a range from 1.5 to 3.5. For the case of hydrochloric acid, a preferred normality is in a range from 1.8 to 3.5, and more preferably from 2 to 3. For other acids or bases, their concentrations may be selected so as the surface of the thermoplastic resin after the treatment, (which can be determined by, for example, a scanning electron microscope (SEM)), to become equivalent to that of the hydrogen chloride treatment.

For instance, the treatment in the step can use a method of immersing the thermoplastic resin-molded article into an acid or base free from heavy metal. Specifically there is applied a method immersing the article in an acid or base free from heavy metal at a liquid temperature in a range from 10°C to 80°C for a period from 0.5 to 20 minutes. When hydrochloric acid with a normality in a range from 1.5 to 3.5 is used, the article may be immersed in an aqueous solution of hydrochloric acid with the above concentration range at a temperature ranging from 20°C to 60°C for a period from 1 to 10 minutes.

Then, the step of treating with a catalyst-providing liquid is given to the thermoplastic resin-molded article after the preceding step. The step is a known one, and it is preferable to give a step of water-washing before and after the step.

The catalyst-providing liquid may be a known one. Examples of the catalyst-providing liquid are the one containing a catalyst metal, a tin compound and an acid, and, at needed, containing other components.

The catalyst may be a known one. Examples of the catalyst are a platinum compound (platinum chloride salt, and the like), a gold compound (gold sulfite salt, and the like), a palladium compound (palladium chloride, palladium sulfate, and the like), a silver compound (silver nitrate, silver sulfate, and the like). A preferable amount of the catalyst is in a range from 100 to 500 mg/L as metal.

Applicable tin compound includes tin(II) chloride and tin(II) sulfate. A preferable use amount of the tin compound is in a range from 10 to 50 g/L as tin, and 50 to 120 times (mass basis) the amount of the catalyst metal.

The acid is hydrochloric acid, sulfuric aid, or a mixed acid of hydrochloric acid and sulfuric acid. Alternatively, they may be mixed with sodium chloride. The acid is adjusted so as the pH of the catalyst-providing liquid to become around 1.

A preferable catalyst-providing liquid is the one which contains a palladium compound as the catalyst, tin (II) chloride as the tin compound, and hydrochloric acid as the acid. The treatment in the step can adopt a method of immersing the thermoplastic resin-molded article into a catalyst-providing liquid at room temperature for a period approximately from 1 to 10 minutes.

In the next step, an electrically conductive layer is formed on the surface of the thermoplastic resin molded article using the direct plating method. The direct plating method is a known technique, and is disclosed in JP-A 5-239660, WO 98/45505 (Patent No. 3208410), JP-A 2002-338636 (Paragraph No.5), and others. During the step, a plating liquid called the "selector liquid" is used, thus forming a very thin electrically conductive layer compared with the plating layer (electrically conductive layer) formed by the conventionally and widely using chemical plating.

Use of the direct plating method is superior in the following items to the manufacturing method of the inventions of JP-A 2003-82138 and 2003-166067, containing the electroless plating method (chemical plating method).
(1) Safety is high because of strong reducing power of formalin and the like and of free from toxic substances as seen in the case of electroless plating method (chemical plating method).
(2) Manufacturing time can be decreased and manufacturing cost can be decreased because of not-need of activation step after the catalyst-providing step, thus decreasing the man-hours.
(3) Although the electroless plating method (chemical plating method) needs further pluralities of steps before the electroplating, the direct plating method allows immediately entering the electroplating so that the man-hours can be decreased, the manufacturing time can be decreased, and the manufacturing cost can be decreased.
(4) Electroless plating method (chemical plating method) results in deposition of plating also on the jigs using in the plating, thus the replacement of jigs becomes necessary. Direct plating method, however, plating very little deposits on the jigs.

Applicable selector liquid includes a liquid containing a metallic compound, a reducing compound, and a metallic hydroxide.

A preferred metallic compound is a copper compound. Examples of the copper compound are copper (II) sulfate, copper chlorides, copper carbonates, copper oxides and copper hydroxides. The content of copper compound is preferably in a range from 0.1 to 5 g/L as copper, and more preferably from 0.8 to 1.2 g/L.

The reducing compound does not include the one having strong reducing power, such as formalin and phosphinic acid, which are widely used in known electroless plating (chemical plating), and is the one having weak reducing power compared with those given above. Examples of the reducing compound include the following:
tin(II) chloride, sodium borohydride, dimethylamine borane, trimethylamine borane, formic acid or salt thereof, alcohol such as methanol, ethanol, propanol, ethylene glycol or glycerin, and salt thereof; and
reducing saccharide such as glucose, sorbite, cellulose, sucrose, mannite or gluconolactone. The content of succharide is preferably in a range from 3 to 50 g/L, and more preferably from 10 to 20 g/L.

Applicable metallic hydroxide includes sodium hydroxide, potassium hydroxide and lithium hydroxide. The content of metallic hydroxide is preferably in a range from 10 to 80 g/L, and more preferably from 30 to 50 g/L.

The selector liquid can, at needed, further contain a complexing agent. Applicable complexing agent includes hydantoins and organic carboxylic acids. The hydantoins include hydantoin, 1-methylhydantoin, 1,3-dimethylhydantoin, 5,5-dimethylhydantoin and allantoin. Applicable organic carboxylic acids include citric acid, tartaric acid, succinic acid, and salt thereof. The content of complexing agent in the selector is preferably in a range from 2 to 50 g/L, and more preferably from 10 to 40 g/L.

The pH of selector liquid is preferably in a range from 10.0 to 14.0, and more preferably from 11.55 to 13.5.

Examples of the selector liquid are the plating bath described in Experimental Example 1(C) of JP-A 5-239660, and the invention baths 1 to 8 described in WO 98/45505 (Patent No. 3208410). If needed, other known components may also be added to the bath.

The treatment in the step may adopt a method in which the temperature of the selector liquid is adjusted to a range preferably from 20°C to 70°C, more preferably from 35°C to 50°C, then the thermoplastic resin molded article is immersed in the liquid for a period approximately from 30 seconds to 20 minutes, preferably approximately from 3 to 5 minutes.

Since the treatment of the step forms a very thin electrically conductive layer on the surface of the thermoplastic resin-molded article, the succeeding step can directly apply the electroplating.

After that, a know method is used to conduct electroplating of copper, nickel, chromium, and the like onto the thermoplastic resin-molded article on which the electrically conductive layer is formed in the preceding step.

The thermoplastic resin molded article to which the manufacturing method of the present invention is applied can be obtained by molding a thermoplastic resin composition containing a combination of one or more of the thermoplastic resins described below, and, at needed, other components.

Although the thermoplastic resin can be arbitrarily selected among the known ones responding to the uses, the present invention preferably uses a polyamide-based resin, a styrene-based resin, an olefin-based resin, a polyphenylene ether resin (PPE), a polyphenylene sulfone resin (PPS), and a polysulfone resin, and more preferably uses a thermoplastic resin composition which contains a polyamide-based resin.

A preferable thermoplastic resin is the one having a water absorption (in water at 23°C after 24 hours have passed: ISO 62) of 0.6% or more, more preferably in a range from 0.6 to 5%, and most preferably from 0.6 to 2%.

If a thermoplastic resin having poor water absorption is treated by a manufacturing method containing direct plating method, the increase in the man-hours is inevitable to attain the optimum conditions to manufacture the resin-molded article having beautiful appearance and high adhesion of plating. If, however, the resin composition which contains a thermoplastic resin having good water absorption (also good adsorption of metal) as described above, or a resin composition containing a thermoplastic resin having good water absorption is used, the direct plating method readily forms the electrically conductive layer, which is preferable because of decreasing the man-hours.

If a thermoplastic resin composition containing two or more of resins is used, it is preferable that the content of the thermoplastic resin which satisfies the above water absorption is adjusted to 30% by mass or more.

The polyamide-based resin is a polyamide resin formed from diamine and dicarboxylic acid, and a copolymer thereof. The resin may be in crystalline shape, in amorphous shape, or in a mixture thereof. If crystalline shape and amorphous shape are mixed together, the crystallinity degree is preferably 60% or less, and more preferably 40% or less.

The polyamide-based resin includes: nylon 66, polyhexamethylene sebacamide (nylon 6.10), polyhexamethylene dodecanamide (nylon 6.12), polydodecamethylene dodecanamide (nylon 1212), polymethaxylylene adipamide (nylon MXD6), polytetramethylene adipamide (nylon 46), their mixture, and a copolymer thereof; nylon 6/66, nylon 66/6T (6T: polyhexamethylene terephthalamide) containing 50% by mole or less of 6T component, nylon 66/61 (61: plyhexamethylene isophthalamide) containing 50% by mole or less of 61 component, copolymer of nylon 6T/6I/66 and nylon 6T/6I/610; polyhexamethylene terephthalamide (nylon 6T), polyhexamethylene isophthalamide (nylon 61), poly(2-methylpentamethylene)terephthalamide (nylon M5T), poly(2-methylpentamthylene)isophthalamide (nylon M5I), and copolymer of nylon 6T/6I and of nylon 6T/M5T. Other than the above, a copolymer nylon such as amorphous nylon is applicable. An example of the amorphous nylon is polycondensate of terephthalic acid and trimethyl hexamethylene diamine.

Other applicable polyamide-based resins are a ring-opened polymer of cyclic lactam, a polycondensate of aminocarboxylic acid, and a copolymer composed of these components; specifically an aliphatic polyamide resin such as nylon 6, poly-ω-undecanamide (nylon 11) or poly-ω-dodecanamide (nylon 12), and a copolymer thereof, a copolymer with polyamide consisting of diamine and dicarboxylic acid, specifically nylon 6T/6, nylon 6T/11, nylon 6T/12, nylon 6T/6I/12, nylon 6T/6I/610/12, and a mixture thereof.

As of these, preferable polyamide-based resins are PA (nylon) 6, PA (nylon) 66 and PA (nylon)6/66.

A preferred polyamide-based resin is the one having 10 J/g or larger heat of crystal fusion, more preferably from 10 to 150 J/g, further preferably from 15 to 120 J/g, specifically preferably from 20 to 100 J/g, and most preferably from 25 to 90 J/g. The polyamide-based resin which has the heat of crystal fusion within the above range contains the crystal portion being determined by the heat of crystal fusion and also contains residual amorphous portions.

By specifying the heat of crystal fusion of the polyamide-based resin to the above range, the amorphous portion of the polyamide-based resin is separated from the surface of the thermoplastic resin-molded article, and the function of micropores created after the separation of the amorphous portion induces the formation of the strong plating layer, which is preferable.

The heat of crystal fusion is determined by DSC observation. That is, 5 to 10 mg of sample is collected from the target polyamide-based resin pellets. The sample is scanned by DSC 600E (manufactured by Shimadzu Corp.) for two times of temperature scanning under the conditions of 20°C/min of temperature-rising speed and 20°C/min of temperature-lowering speed. The heat of crystal fusion observed in the second scan is adopted as the heat of crystal fusion.

Examples of the styrene-based resin are styrene and polymers of styrene-derivatives such as α-substitution or nucleus substitution styrene. There are also included copolymers composed mainly of above monomers and containing monomers such as vinyl compound such as acrylonitrile, acrylic acid, and methacrylic acid, and/or conjugate diene compound such as butadiene and isoprene. Examples of them are polystyrene, high-impact polystyrene (HIPS resin), acrylonitrile-butadiene-styrene copolymer (ABS resin), acrylonitrile-styrene copolymer (AS resin), styrene-methacrylate copolymer (MS resin) and styrene-butadiene copolymer (SBS resin).

The polystyrene-based resin may contain a styrene-based copolymer in which an unsaturated compound containing carboxy group is copolymerized to increase the compatibility with polyamide-based resin. The styrene-based copolymer in which the unsaturated compound containing carboxy group is copolymerized is a copolymer prepared by polymerizing an unsaturated compound containing carboxylic group with, at needed, other monomer which can copolymerized therewith, in the presence of a gummy polymer. Examples of the components are:
(1) a graft polymer prepared by polymerizing a monomer containing an aromatic vinyl monomer as the essential component or a monomer containing an aromatic vinyl compound and an unsaturated compound containing carboxy group as the essential components in the presence of a gummy polymer prepared by copolymerizing an unsaturated compound containing carboxy group;
(2) a graft copolymer prepared by copolymerizing an aromatic vinyl compound and an unsaturated compound containing carboxy group as the essential components in the presence of a gummy polymer;
(3) a mixture of a rubber-strengthening styrene-based resin in which the unsaturated compound containing carboxy group is not copolymerized and a copolymer of a monomer containing an unsaturated compound containing carboxy group and an aromatic vinyl compound as the essential components;
(4) a mixture of the above (1) and (2), and a copolymer containing an unsaturated compound containing carboxy group and an aromatic vinyl compound as the essential compounds; and
(5) a mixture of the above (1), (2), (3) and (4), and a copolymer containing the essential component of an aromatic vinyl compound.

In above 1) to 5), the aromatic vinyl compound is preferably styrene, and the monomer copolymerizing with the aromatic vinyl compound is preferably acrylonitrile. The content of the unsaturated compound containing carboxyl group in the styrene is preferably in a range from 0.1 to 8% by mass, and more preferably from 0.2 to 7% by mass.

The olefin-based resin is a polymer containing a main component of monomer of C2-8 olefin, which includes one or more of low-density polyethylene, high-density polyethylene, linear low-density polyethylene, polypropylene, ethylene-propylene random copolymer, ethylene-propylene block copolymer, polymethylpentene, polybutene-1, and a modified compound thereof. As of these, polypropylene and acid-modified polypropylene are preferred.

As for the polyphenylene ether resin, examples of the polyphenylene ether applicable in the present invention includes poly(2,3-dimethyl-6-ethyl-1,4-phenylene ether), poly(2-mehyl-6-chloromethyl-1,4-phenylene ether), poly(2-methyl-6-hydroxyethyl-1,4-phenylene ether), ply(2-methyl-6-n-butyl-1,4-phenylene ether), poly(2-ethyl-6-isopropyl-1,4-phenylene ether), poly(2-ethyl-6-n-propyl-1,4-phenylene ether), poly(2,3,6-trimethyl-1,4-phenylene ether), poly(2-(4'-methylphenyl)-1,4-phenylene ether), poly(2-bromo-6-phenyl-1,4-phenylene ether), poly(2-methyl-6-phenyl-1,4-phenylene ether), poly(2-phenyl-1,4-phenylene ether), poly(2-chloro-1,4-phenylene ether), poly(2-methyl-1,4-phenylene ether), poly(2-chloro-6-ethyl-1,4-phenyelen ether), poly(2-chloro-6-bromo-1,4-phenylene ether), poly(2,6-di-n-propyl-1,4-phenylene ether), poly(2-methyl-6-isopropyl-1,4-phenylene ether), poly(2-chloro-6-methyl-1,4-phenylene ether), poly(2-methyl-6-ethyl-1,4-phenylene ether), poly(2,6-dibromo-1,4-phenylene ether), poly2,6-dichloro-1,4-phenylene ether), poly(2,6-diethyl-1,4-phenylene ether) and poly(2,6-dimethyl-1,4-phenylene ether). As of these, specifically preferred one is poly(2,6-dimethyl-1,4-phenylene ether).

Other components being blended, at needed, in the thermoplastic resin include a chelating agent, a water-soluble substance, a surfactant and/or a coagulant and a phosphorus-based substance from the point to increase the adhesion between the thermoplastic resin-molded article and the plating layer.

The chelating agent is a component to bring the metal in the plating bath to easily adhere onto the surface of the resin molded article, and the one selected from the group given below may be used.

Aliphatic diamine such as methylene diamine, ethylene diamine, trimethylene diamine, tetramethylene diamine, pentamethylene diamine or hexamethylene diamine; aromatic diamine such as o-, m- and p-phenylene diamine, benzidine or diaminostilbene;

ethane-1,1-diphosphonic acid, ethane-1,1,2-triphosphonic acid, ethane-1-hydroxy-1,1-diphosphonic acid, and derivative thereof; phosphonic acid such as ethane hydroxy-1,1-2-triphosphonic acid, ethane-1,2-dicarboxy-1,2-diphosphonic acid, methane hdyroxyphosphonic acid, and alkali metal salt or alkanolamine salt thereof;
phosphonocarboxylic acid such as 2-phosphonobutane-1,2-dicarboxylic acid, 1-phosphonobutane-2,3,4-tricarboxylic acid, α-methylphosphono succinic acid, or alkali metal salt or alkanolamine salt thereof;
amino acid such as aspartic acid, glutamic acid, glycine, and alkali metal salt or alkanolamine salt thereof;
amino polyacetate such as nitrilo triacetate, imino diacetate, ethylenediamine tetraacetate, diethylene triamine penta-acetate, grycolether diamine tetra-acetate, hydroxyethylimino diacetate, triethylenetetramine hexa-acetate, dienkolic acid, and alkali metal salt or alkanolamine salt thereof;
organic acid such as glycolic acid, diglycolic acid, oxy-disuccinic acid, carboxymethyloxy succinic acid, citric acid, malonic acid, lactic acid, tartaric acid, oxalic acid, malic acid, oxy disuccinic acid, gluconic acid, carboxymethyl succinic acid, carboxymethyl tartaric acid, α-hydroxy propionic acid, α-hydroxy isobutyric acid, and alkali metal salt or alkanolamine salt thereof;
alkali metal salt or alkanolamine salt of aluminosilicate represented by zeolite A;
aminopoly(methylene sulfonic acid) or metal salt or alkanolamine salt thereof, or polyethylene-polyamine-poly(methylene sulfonic acid) or alkali metal salt or alkanolamine salt thereof.

Content of the chelating agent in the thermoplastic resin molded article is preferably in a range from 0.1 to 20 parts by mass to 100 parts by mass of the thermoplastic resin, more preferably from 0.1 to 15 parts by mass, and further preferably from 0.1 to 10 parts by mass.

The water-soluble substance is a substance soluble in water independent of the solubility. Examples thereof are: polysaccharide such as starch, dextrin, pullulan, hyaluronic acid, carboxymethyl cellulose, methyl cellulose, ethyl cellulose, and salt thereof; polyhydric alcohol such as propylene glycol, ethylene glycol, diethylene glycol, neopentyl glycol, butanediol, pentanediol, polyoxyethylene glycol, polyoxypropylene glycol, trimethylol propane, pentaerythritol, dipentaerythritol or glycerin; polyvinyl alcohol, polyacrylic acid, polymaleic acid, polyacrylamide, polyvinylpyrrolidone, polyethylene oxide, acrylic acid-maleic acid anhydride copolymer, maleic acid anhydride-diisobutylene copolymer, maleic acid anhydride-vinyl acetate copolymer, naphthalene sulfonic acid salt-formalin condensate, and salt thereof.

As of these, preferred ones are those soluble in water with a small solubility. Specifically preferred ones are those having solubility (23°C) in water of 300 g/100 g, more preferably 100 g/100 g or less, and most preferably 10 g/100 g or less. Examples of those compounds are pentaerythritol (7.2 g/100 g) and dipentaerythritol (0.1 g/100 g or less).

The content of water-soluble compound in the thermoplastic resin molded article is preferably in a range from 0.01 to 50 parts by mass to 100 parts by mass of the thermoplastic resin, more preferably from 0.01 to 30 parts by mass, and most preferably from 0.01 to 15 parts by mass.

Applicable surfactant and/or coagulant may be a surfactant (emulsifier) left behind in the resin after used in emulsion polymerization (if applied) to manufacture the thermoplastic resin, or may be the one separately added to the thermoplastic resin if the manufacture method such as bulk polymerization which does not use emulsifier is applied.

The surfactant and/or solidifier include the one used in the emulsion polymerization of resin, and the one other than used in the emulsion polymerization. A preferable surfactant includes anionic surfactant, cationic surfactant, nonionic surfactant and amphoteric surfactant.

Examples of these surfactants are: anionic surfactant such as fatty acid salt, resin acid salt, alkylsulfate, alkylbenzene sulfonate, alkyldiphenylether sulfonate, polyoxyethylene alkylether sulfonate ester, sulfosuccinic acid diester salt, α-olefinsulfuric acid ester salt or α-olefin sulfonate; cationic surfactant such as mono- or di-alkylamine or polyoxyethylene additive thereof, mono- or di-long chain alkyl quaternary ammonium salt; nonionic surfactant such as alkylglucoside, polyoxyethylene alkyl ether, polyoxyethylene alkylphenyl ether, sucrose fatty acid ester, sorbitan fatty acid ester, polyoxyethylene sorbitan fatty acid ester, polyoxyethylene fatty acid ester, polyoxyethylene propylene block copolymer, fatty acid monoglyceride or amine oxide; and amphoteric surfactant such as carbobetaine, sulfobetaine or hydroxysulfobetaine.

The content of surfactant and/or coagulant in the thermoplastic resin molded article is preferably in a range from 0 . O1 to 10 parts by mass to 100 parts by mass of the thermoplastic resin, more preferably from 0.01 to 5 parts by mass, and most preferably from 0.01 to 2 parts by mass.

The phosphorus based compound is a component to increase the adhesion of plating, and one or more of the followings may be used.

Condensate phosphoric acid ester such as triphenyl phosphate, tricredil phosphate, trixylenyl phosphate, tris(isopropylphenyl)phosphate, tris(o- or p-phenylphenyl)phosphate, trinaphtyl phosphaate, credil diphenyl phosphate, xylenyl diphenyl phosphate, diphenyl(2-ethylhexyl)phosphate, di(isoproplylphenyl)phenyl phosphate, o-phenylpyhenyl dicresil phosphate, tris(2,6-dimethylphenyl)phosphate, tetraphenyl-m-phenylene diphosphate, tetraphenyl-p-phenylene diphosphate, phenyl resorcin-polyphosphate, bisphenol A-bis(diphenylphosphate), bisphenol A-polyphenyl phosphate or dipyrocatechol hypodiphosphate;

Fatty acid-aromatic phosphoric acid ester including ortho-phorophoric acid ester such as diphenyl(2-ethylhexyl) phosphate, diphenyl-2-acryloyloxyethyl phosphate, diphenyl-2-methacryloyloxyethyl phosphate, diphenyl neopentyl phosphate, pentaerythritol diphenyldiphosphate or ethylpyrocatechol phosphate;

Alkali metal salt such as melamine polyphosphate, tripolyphosphoric acid, pyrophoric acid, orthophosphoric acid or hexamethaphosphoric acid, phosphoric acid-based compound such as phytic acid, and alkali metal or alkanolamine salt thereof.

Furthermore, as the phosphorus-based compound other than above, there are applicable phosphorus-based compounds which are used in known flame-retardant and antioxidant for resins.

The content of the phosphorus-based compound in the thermoplastic resin molded article is preferably in a range from 0. 1 to 30 parts by mass to 100 parts by mass of the thermoplastic resin, more preferably from 0.1 to 20 parts by mass, and most preferably from 0.1 to 10 parts by mass.

The plated resin molded article prepared by applying the method of the present invention provides the adhesion between the thermoplastic resin molded article and the metallic plating layer, (JIS H8630) of preferably 10 kPa or more as the maximum value, more preferably 50 kPa or more as the maximum value, most preferably 100 kPa or more as the maximum value, and most preferably 150 kPa or more as the maximum value.

The plated resin molded article obtained by the manufacturing method of the present invention can select the shape of the plated resin molded article, the kind of plating layer, the thickness of the plating layer, and the like depending on the uses, thus allowing applications in varieties of uses. In particular, the plated resin-molded article according to the present invention is suitable for the automobile parts such as bumpers, emblems, wheel caps, interior parts, and exterior parts.

### Examples

### (Adherence test of plating layer)

The adhering strength (the highest value) between the resin molded article and a metal plating layer was measured according to the adherence test method described in appendix 6 in JIS H8630 using the plated resin molded articles obtained in Examples and Comparative Examples.

### (Components in the thermoplastic resin molded article)

A-1 Polyamide (polyamide 6, UBE nylon 6 1013B, water absorption 1.8%, manufactured by Ube Industries Ltd.)
B-1 ABS resin (styrene 45% by mass, acrylonitrile 15% by mass, polybutadiene-based rubber 40% by mass, water absorption 0.2%)
B-2 AS resin (styrene 75% by mass, acrylonitrile 25% by mass, water absorption 0.2%)
B-3 Acid-modified ABS resin (styrene 42% by mass, acrylonitrile 16% by mass, rubber 40% by mass, methacrylic acid 2% by weight, water absorption 0.2%)
C-1 Dipentaerithritol

### Examples 1 to 4

The respective components given in Table 1 were blended in a V-shape tumbler, which were then melted and kneaded in a twin-screw extruder (TEX30, cylinder temperature 230°C, manufactured by The Japan Steel Works, Ltd.) to prepare pellets.

The pellets were fed to an injection molding machine (cylinder temperature 240°C, mold temperature 60°C) to form molded articles of 100 x 50 x 3 mm in size. The molded articles were treated as the test pieces for electroless plating in accordance with the following procedure, thus obtained the plated resin molded articles. The adhering strength of the plating layer on these plated resin molded articles is given in Table 1.

### (1) Degreasing step

The resin molded articles were immersed in a 50 g/L aqueous solution (a solution temperature of 40°C) of ACECLEAN A-220 (manufactured by OKUNO Pharmaceuticals Co., Ltd.) for 5 minutes.

### (2) Etching step

The resin molded articles were immersed in an aqueous solution of 200 ml/L (2.3 N) of 35% by weight of hydrochloric acid (a solution temperature of 40°C) for 5 minutes.

### (3) Catalyst imparting step

The resin molded articles were immersed in a mix aqueous solution (a solution temperature of 25°C) of 150 ml/L of 35% by weight of hydrochloric acid and 40 ml/L aqueous solution of Catalyst C (manufactured by OKUNO Pharmaceuticals Co., Ltd.) for 3 minutes.

### (4) Direct plating step

The resin molded articles were immersed in a selector liquid having the following composition (at 45°C and pH 12) for 3 minutes to form the electrically conductive layer on the surface of the resin molded article.
Copper(II) sulfate 3 g/L
Sodium hydroxide 30 g/L
Glucose 10 g/L
Hydantoin 10 g/L

### (5) Electroplate step of copper

The resin molded articles were immersed in the plating bath having the following composition (a solution temperature of 25°C), and electroplate was carried out for 120 minutes.

### (Composition of plating bath)

Copper sulfate (CuSO₄ · 5H₂O) : 200 g/L
Sulfuric acid (98%): 50 g/L
Chlorine ion (Cl⁻) : 5 ml/L
TOP LUCINA 2000 MU (manufactured by OKUNO Pharmaceuticals Co., Ltd.) : 5 ml/L

**Table 1**

| | | Examples | | | |
|---|---|---|---|---|---|
| | | 1 | 2 | 3 | 4 |
| (A) | A-1 | 60 | 60 | 40 | 40 |
| (B) | B-1 | 30 | 30 | 50 | 50 |
| | B-2 | | | | |
| | B-3 | 10 | 10 | 10 | 10 |
| (C) | C-1 | | 10 | | 10 |
| Adhering strength (kPa) | | 85 | 110 | 50 | 60 |

| | | | | | |
|---|---|---|---|---|---|
| (A)-(B): total 100% by mass (C): parts by mass to 100 parts by mass of the sum of (A) and (B) | | | | | |

The appearance of the molded articles in Examples 1 to 4 is smooth and beautiful.

### Comparative Example 1

With the same thermoplastic resin molded articles to those in Example 2, the following-given steps without containing the direct plating method were applied to prepare the plated resin molded articles. The maximum value of the adhering strength of the plated resin molded articles was 100 kPa, giving smooth and beautiful appearance. However, the manufacture consumed large man-hours compared with that in Example 2.

### (1) Degreasing step

The test piece was immersed in a 50 g/L aqueous solution (a solution temperature of 40°C) of ACECLEANA-220 (manufactured by OKUNO Pharmaceuticals Co., Ltd.) for 20 minutes.

### (2) Contact treatments step with an acid

The test piece was immersed in 100 mL 1.0 N hydrochloric acid (liquid temperature=40°C) for 5 minutes.

### (3) Catalyst imparting step

The test piece was immersed in a mix aqueous solution (a solution temperature of 25°C) of 150 ml/L of 35% by weight of hydrochloric acid and 40 ml/L aqueous solution of Catalyst C (manufactured by OKUNO Pharmaceuticals Co., Ltd.) for 3 minutes.

### (4) The first activation step

The test piece was immersed in 100 ml/L aqueous solution (a solution temperature of 40°C) of 98% by weight of sulfuric acid for 3 minutes.

### (5) The second activation step

The test piece was immersed in 15 g/L aqueous solution (a solution temperature of 40°C) of sodium hydroxide for 2 minutes.

### (6) Electroless plating step of nickel

The test piece was immersed in a mix aqueous solution (a solution temperature of 40°C) of 150 ml/L of Chemical Nickel HR-TA (manufactured by OKUNO Pharmaceuticals Co., Ltd.) and 150 ml/L of Chemical Nickel HR-TB (manufactured by OKUNO Pharmaceuticals Co., Ltd.) for 5 minutes.

### (7) Acid activation step

The test piece was immersed in 100 g/L aqueous solution (a solution temperature of 25°C) of TOP SAN (manufactured by OKUNO Pharmaceuticals Co., Ltd.) for one minute.

### (8) Electroplate step of copper

The test piece was immersed in the plating bath same to that of Example 1 (a solution temperature of 25°C), and electroplate was carried out for 120 minutes.

## Claims

1. A method for manufacturing a plated resin molded article, comprising the steps of: contact-treating a thermoplastic resin molded article with an acid or base being free from heavy metal; treating the contact-treated thermoplastic resin molded article with a catalyst-imparting liquid; forming an electrically conductive layer on the surface of the thermoplastic resin molded article by direct plating method; and applying electroplating to the electrically conductive layer; without any etching step by an acid which contains heavy metal.

2. The method for manufacturing plated resin molded article according to claim 1, wherein the direct plating method comprises the step of forming an electrically conductive layer on the surface of a thermoplastic resin molded article with a selector liquid which contains a metal compound, a reducing compound and a metal hydroxide.

3. The method for manufacturing plated resin molded article according to claim 1 or 2, wherein the thermoplastic resin molded article comprises a polyamide.

4. The method for manufacturing plated resin molded article according to claim 1 or 2, wherein the thermoplastic resin molded article further comprises a substance which has a solubility (23°C) in water of 300 g/100 g or less.

5. The method for manufacturing plated resin molded article according to claim 1 or 2, wherein the thermoplastic resin molded article comprises a polyamide, and further a substance which has a solubility (23°C) in water of 300 g/100 g or less.
